# EUROPÄISCHE PATENTSCHRIFT

(11) **EP 1 820 428 B1**
(45) Veröffentlichungstag und Bekanntmachung des Hinweises auf die Patenterteilung: **21.07.2010**
(21) Anmeldenummer: 07003108.3
(22) Anmeldetag: 14.02.2007
(51) Int. Cl.: A47J 31/40

(54) **Kaffeemaschine zur Zubereitung eines Kaffeegetränkes mittels abgepackter, vorproportionierter Kaffeepouches**
Coffee machine for preparation of coffee with packaged, pre-proportioned coffee pouches
Machine à café pour préparation de café avec poches à café empaquetées et préproportionnées

(30) Priorität: 17.02.2006 DE 202006002678 U
(43) Veröffentlichungstag der Anmeldung: 22.08.2007
(73) Patentinhaber: Eugster/Frismag AG, 8590 Romanshorn (CH)
(72) Erfinder: Fischer, Daniel, 8590 Romanshorn (CH)
(74) Vertreter: Schubert, Siegmar

(56) Entgegenhaltungen:
- EP-B1- 1 152 678
- WO-A-96/08990
- DE-C1- 4 338 629

## Beschreibung

Die Erfindung betrifft eine Kaffeemaschine zur Zubereitung eines Kaffeegetränkes mittels abgepackter, vorportionierter Kaffeepouches nach dem Oberbegriff des Anspruchs 1.

Unter einem abgepackten, vorportionierten Kaffeepouch wird eine Portion gemahlenen Kaffees in einer flachen, kissenähnlichen Umhüllung aus einem Material, insbesondere Papier, welches mit Brühwasser durchdrungen werden kann, verstanden.

Nach dem gegenwärtigen, aus der Praxis bekannten Standard verarbeiten Kaffeemaschinen solche Kaffeepouches in der Weise, dass diese in einen Aufnahmeträger gelegt werden, der anschliessend in eine Brüheinheit, die aus einem Brühkammeroberteil und einem Brühkammerunterteil besteht, bewegt wird. Nach dem Beschicken der Brüheinheit mit dem Kaffeepouch wird die Brüheinheit für den Brühvorgang dicht geschlossen, wonach in die Brüheinheit Brühwasser unter Druck eingeleitet wird, welches die Portion abgepackten Kaffees durchdringt, wobei das Kaffeegetränk gebrüht wird und ein ausgelaugter Kaffeepouch zurückbleibt. Eine Entsorgung des verbrauchten Kaffeepouches erfolgt nach Öffnen der Brüheinheit, Herausbewegen des Aufnahmeträgers aus der Brüheinheit und Entnahme des verbrauchten Kaffeepouches in der Regel manuell.

Um die umständliche manuelle Entnahme des verbrauchten Kaffeepouches aus der Brüheinheit zu vereinfachen und weitgehend zu automatisieren, ist bereits eine Kaffeemaschine der eingangs genannten Gattung bekannt, bei der das Brühkammerunterteil Ausstosseinrichtungen zur automatischen Entfernung des verbrauchten Kaffeepouches während einer Zurückziehbewegung des Brühkammerunterteils aus der Position der Brühkammer und in Zusammenspiel mit dieser Zurückziehbewegung umfasst (EP 1 152 678 B1). Das Brühkammerunterteil umfasst elastische Einrichtungen, welche mindestens während der Zurückziehbewegung den Kaffeepouch von einem Boden eines Sitzes in dem Brühkammerunterteil losgelöst halten, um den Austrag des verbrauchten Kaffeepouches zu erleichtern. Ein Träger des Brühkammerunterteils, der insbesondere als Wagen ausgebildet ist, kann horizontal auf einer Führung gleiten und mit einer Motor-Bewegungseinrichtung gekoppelt sein oder aber von Hand bewegbar sein. Der Träger umfasst an seinem hinteren, unteren Teil eine Austragöffnung, durch die der verbrauchte Kaffeepouch fallen kann, wenn dieser in einem von dem Boden des Sitz gelösten, angehobenen Zustand bei Zurückziehen des Trägers durch die Ausstosseinrichtungen an einer Mitnahme mit dem Träger gehindert wird und somit zu der Austragöffnung rutscht. Damit der angehobene Zustand des verbrauchten Kaffeepouches auf dem Brühkammerunterteil nach Öffnen der Brühkammer gewährleistet ist, kann es zweckmässig sein, dass auch das Brühkammeroberteil mit elastischen Einrichtungen zusammenwirkt, welche den verbrauchten Kaffeepouch im offenen Zustand der Brühkammer wenigstens teilweise von dem Brühkammeroberteil losgelöst halten. Im einzelnen umfassen die Ausstosseinrichtungen Rückhalteeinrichtungen, welche den verbrauchten Kaffeepouch zurückhalten können, während der Träger von seiner inneren Position, in der die Brühkammer geschlossen wird, nach Öffnen der Brühkammer zur äusseren Position bewegt wird. Die Rückhalteeinrichtungen umfassen eine im wesentlichen vertikale Schwingrippe, die quer zur Bewegungsrichtung des Trägers angeordnet ist. Die Schwingrippe ist an der Vorderseite neben der Position der Brühkammer bzw. des Brühkammeroberteils angeordnet und kann aus der Bewegungsbahn des Kaffeepouches entfernt werden, d.h. geschwenkt werden, um einen frischen Kaffeepouch während der Bewegung des Trägers von seiner äusseren Position, in welcher der Kaffeepouch auf den Träger aufgelegt werden kann, zur inneren Position des Trägers vorbeibewegen zu lassen. Hierzu kann die Schwingrippe mit Nockeneinrichtungen betätigt werden, die mit Längsprofilen an dem Wagen zusammenwirken, so dass die Aktivierung und Deaktivierung der Schwingrippe bei einer horizontalen Bewegung des Trägers selbsttätig erfolgen kann. Nachteilig ist bei dieser Kaffeemaschine, dass die Ausstosseinrichtungen, insbesondere die Schwingrippe neben der Brühkammer, nämlich dem Brühkammeroberteil, über der horizontalen Bewegungsbahn des Trägers angeordnet sein müssen, wodurch sich die Bauform der Kaffeemaschine in diesem Bereich vergrössert. Ausserdem wirken die elastischen Einrichtungen in dem Brühkammerunterteil und gegebenenfalls auch in dem Brühkammeroberteil einem dichten Verschliessen der Brühkammer durch Zusammenführen deren beiden Teile entgegen.

Diese Nachteile werden auch nicht durch eine Variante der obigen bekannten Kaffeemaschine vermieden, die für Kapseln, welche abgepackte Portionen Kaffee beinhalten, vorgesehen ist. Bei dieser Variante sind auf dem Träger Schliessklauen montiert, die mit festen Widerlagern zusammenwirken, um in einer ersten Übergangsposition die Kapsel auf dem Träger festzuklemmen, und in einer zweiten Übergangsposition die Kapseln freigeben. Diese Schliessklauen für formstabile Kapseln sind zum Festklemmen eines Kaffeepouches im übrigen ungeeignet.

Der vorliegenden Erfindung liegt somit die Aufgabe zugrunde, eine Kaffeemaschine zur Zubereitung eines Kaffeegetränkes mittels abgepackter, vorportionierter Kaffeepouches bereitzustellen, welche die Nachteile der bekannten Kaffeemaschinen vermeidet und die insbesondere ein sicheres, dichtes Verschliessen der Brühkammer mit einliegendem Kaffeepouch vor dem Brühvorgang und danach sowie nach Öffnen der Brühkammer ein zuverlässiges selbsttätiges Auswerfen des verbrauchten Kaffeepouches aus der Kaffeemaschine kompakter Bauform ermöglicht.

Diese Aufgabe wird für eine Kaffeemaschine mit den in Anspruch 1 angegebenen Merkmalen gelöst.

Bei der erfindungsgemässen Lösung wird ein nach Brühen des Kaffees verbrauchter Kaffeepouch zuverlässig selbsttätig aus der Kaffeemaschine entfernt, indem zunächst das Brühkammeroberteil, wie auch sonst zum Austausch eines Kaffeepouches üblich, in die von dem Brühkammerunterteil angehobene Position bewegt wird, wodurch die Brühkammer geöffnet wird und in das Innere der Brühkammer bzw. des Brühkammeroberteils und damit in den Kaffeepouch einschiebbare Stechelemente, die an dem Brühkammeroberteil druckdicht gelagert sind, den verbrauchten Kaffeepouch vertikal mitnehmen. Anschliessend kann das Brühkammerunterteil mit dem horizontal verschiebbaren Träger ohne Behinderung durch den verbrauchten Kaffeepouch aus dem Bereich direkt unter dem Brühkammeroberteil horizontal herausgezogen werden und ein Pouchdurchbruch in dem Träger unter das Brühkammeroberteil gelangen, wonach die Stechelemente selbsttätig in ihre herausgezogene Stellung aus dem Inneren des Brühkammeroberteils zurückgezogen werden und den verbrauchten Kaffeepouch freigeben, der durch den Pouchdurchbruch und gegebenenfalls darunter einen Chassisdurchbruch fällt, um die Kaffeemaschine zu verlassen.

Wesentlich sind dabei die verschiebbaren Stechelemente, welche den Kaffeepouch sicher, ohne die Umhüllung des Kaffeepouches erheblich zu verletzen, in einer angehobenen Stellung des Brühkammeroberteils halten können und den Kaffeepouch in dieser Stellung freigeben, wenn sich statt des Brühkammerunterteils der Pouchdurchbruch in dem Träger unter dem Brühkammeroberteil befindet.

Da die Kaffeemaschine neben der Brühkammer im Bereich des Trägers keine Abstreifelemente oder Ausstosselemente für einen auf den Träger fallenden Kaffeepouch aufzuweisen braucht, kann die Kaffeemaschine in der seitlichen Erstreckung kompakt sein.

Gemäss Anspruch 2 ist der Pouchdurchbruch in dem horizontal verschiebbaren Träger so angeordnet, dass er sich im wesentlichen zentrisch unter dem Brühkammeroberteil befindet, wenn der Träger nach Öffnen der Brühkammer in seine herausgezogene Stellung bewegt ist, in der ein frischer Kaffeepouch in das Brühkammerunterteil eingelegt werden kann. Der Träger kann in seitlicher Erstreckung ebenfalls kompakt sein, da keine Ausstosseinrichtungen bzw. Rückhalteeinrichtungen für den verbrauchten Pouch über dem Träger neben der Brühkammerposition angeordnet zu sein brauchen.

Bevorzugt sind die Stechelemente, die in dem Brühkammeroberteil druckdicht gelagert sind, um den Kaffeepouch zeitweise zu halten gemäss Anspruch 3 formstabile Nadeln.

Es ist aber auch möglich, als Stechelemente statt der Nadeln elastische Drähte mit in das Innere des Brühkammeroberteils einschiebbaren Drahtenden vorzusehen, wobei die Drähte nur genügend steif zu sein brauchen, um durch die Umhüllung des Kaffeepouches in diesen sicher eingeschoben zu werden. Beide Arten Stechelemente haben den Vorteil, dass sie zuverlässig in den Kaffeepouch eindringen können, ohne dabei auf diesen grosse Kräfte auszuüben und ohne diesen erheblich zu verletzen.

Bevorzugt sind gemäss Anspruch 5 mehrere Stechelemente einer Stechelementeanordnung in gleichmässigen Bogenabschnitten um eine virtuelle zentrale vertikale Achse, die konzentrisch zu dem Brühkammeroberteil verläuft, gegeneinander versetzt sind. Damit wird erreicht, dass die Stechelemente, wenn sie in das innere des Brühkammeroberteils eingeschoben werden, um in den Kaffeepouch einzudringen, auf diesen keine seitlichen, den Kaffeepouch eventuell verschiebenden Kräfte ausüben, wenn die Enden bzw. Spitzen der Stechelemente in den Kaffeepouch eindringen.

Die oben geschilderte Wirkung der gegeneinander versetzten Anordnung der Stechelemente ist weitgehend optimiert, wenn gemäss Anspruch 6 wenigstens zwei Stechelemente bevorzugt in gleichen Winkelabständen um die virtuelle zentrale vertikale Achse der Stechelementeanordnung angeordnet sind.

Weiterhin zweckmässig sind gemäss Anspruch 7 die als Stechelemente vorgesehenen Nadeln tangential an einem virtuellen Kreis um die virtuelle zentrale vertikale Achse der Stechelementeanordnung ausgerichtet. Damit ergibt sich eine kompakte Anordnung und eine zuverlässige Betätigung mit einer zentral um die vertikale Achse angeordneten Betätigungsmechanik.

Weiterhin bevorzugt sind die Stechelemente schräg von oben in das Innere des Brühkammeroberteils einschiebbar an diesem gelagert. Bei dieser Anordnung können die Stechelemente einerseits zuverlässig in den Kaffeepouch einstechen und diesen andererseits sicher halten bzw. tragen, wenn sie in dem Kaffeepouch eingeschoben sind.

Gemäss Anspruch 9 sind die Stechelemente zweckmässig so angeordnet bzw. gelagert, dass ihre Spitzen bzw. Enden von einer zurückgeschobenen Position nahe der virtuellen zentralen vertikalen Achse in eine von dieser Achse entferntere, in das Innere des Brühkammeroberteils eingeschobene Position geschoben werden können. Somit werden die Spitzen bzw. Enden nach aussen, zu dem Rand des Kaffeepouches hin in diesen eingeschoben, der sich in dem Brühkammeroberteil befindet. Der Kaffeepouch ist in diesem Zustand zuverlässig gegen Herausgleiten aus der Stechelementeanordnung gesichert.

Gemäss Anspruch 10 ist das Brühkammeroberteil zweckmässig so ausgebildet, dass sich die Spitzen bzw. Enden der Stechelemente in einem Deckenabschnitt des Brühkammeroberteils befinden, wenn die Stechelemente zurückgezogen sind, und aus diesem Deckenabschnitt in das Innere des Brühkammeroberteils einschiebbar sind, um ihre Haltefunktion des Kaffeepouches auszuüben. Bei dieser Ausbildung des Brühkammeroberteils treten die Spitzen bzw. Enden der Stechelemente, z.B. bei einem Reinigungsvorgang der geöffneten Brühkammer, nicht störend in das Innere des Brühkammeroberteils hervor.

Eine kompakte und zuverlässige Betätigungsmechanik der als Nadeln ausgebildeten Stechelemente besteht gemäss Anspruch 11 darin, dass das Brühkammeroberteil eine mit der Schliessmechanik der Brühkammer koppelbare Kulissenanordnung einer äusseren Nadelkulisse und einer inneren Nadelkulisse aufweist, wobei die äussere Nadelkulisse mit dem Brühkammeroberteil in fester Verbindung steht und in der äusseren Nadelkulisse eine innere Nadelkulisse vertikal verschiebbar geführt ist und mit dieser durch Nadelträgerarmeinheiten gekoppelt ist. Jede Nadelträgerarmeinheit umfasst einen äusseren, in der äusseren Nadelkulisse verschiebbaren Nadelträgerarm und einen inneren, in der inneren Nadelträgerkulisse verschiebbaren Nadelträgerarm. Der äussere Nadelträgerarm und der innere Nadelträgerarm sind an je einem ihrer Enden fest miteinander verbunden. Der Nadelträgerarm der Nadelträgerarmeinheit mit dem freien, nach unten geneigten Ende trägt an diesem die Nadel, die in einem in dem Deckenabschnitt des Brühkammeroberteils ausgebildeten abgedichteten Kanal verschiebbar ist. Der Kanal ist so in dem Deckenabschnitt angeordnet, dass er in das Innere des Brühkammeroberteils und nach Aufsetzen des Brühkammeroberteils auf das Brühkammerunterteil in das Innere der geschlossenen Brühkammer gerichtet ist.

Diese kompakte Betätigungsmechanik der Nadeln wird gemäss Anspruch 12 dadurch ergänzt, dass zwischen der äusseren Nadelkulisse und der inneren Nadelkulisse eine Rückstellfeder angeordnet ist, welche die innere Nadelkulisse in eine angehobene Stellung bewegt, in der die Nadeln aus dem Inneren des Brühkammeroberteils zurückgezogen sind. Damit ist auch sichergestellt, dass die Nadelspitzen nicht in das Innere des Brühkammeroberteils hervorstehen, wenn keine äussere Kraft auf die Betätigungsmechanik einwirkt.

Zur Kopplung der inneren Nadelkulisse mit der ausserhalb der Kulissenanordnung befindlichen Schliessmechanik der Brühkammer ist auf der inneren Nadelkulisse ein bevorzugt domförmiges Betätigungselement angeordnet. An dem domförmigen Betätigungselement kann ein Element der Schliessmechanik der Brühkammer angreifen, um auf das domförmige Betätigungselement zu drücken und damit die Nadelspitzen in das Innere des Brühkammeroberteils zu schieben.

Fertigungsgünstig können das Brühkammeroberteil und die äussere Nadelkulisse gemäss Anspruch 14 einstückig ausgeformt sein.

In der Ausführungsform nach Anspruch 15 ist jeweils der äussere Nadelträgerarm einer der Nadelträgerarmeinheiten von einer Verbindungsstelle mit dem inneren Nadelträgerarm ausgehend nach unten geneigt und er trägt an seinem freien unteren Ende die Nadel. Die Nadel wird also durch Verschieben des äüsseren Nadelträgerarms und des mit ihm verbundenen inneren Nadelträgerarms zuverlässig bewegt. Die Nadel ragt dabei gemäss Anspruch 16 zweckmässig koaxial aus dem freien unteren Ende des äusseren Nadelträgerarms heraus.

Die Kaffeemaschine umfasst gemäss Anspruch 17 ein Chassis, in dem das Brühkammeroberteil im wesentlichen vertikal geführt ist und der Träger des Brühkammerunterteils im wesentlichen horizontal verschiebbar ist. Dabei umfasst die Schliessmechanik der Brühkammer mindestens einen Schwinghebel, der zur manuellen Betätigung geeignet ist und hierzu an dem Chassis schwenkbar gelagert ist und entfernt von dem Lager einen Gleitbolzen aufweist, welcher in einer mit dem Brühkammeroberteil in Verbindung stehenden Absenk-/Hubnut geführt ist. Als Bestandteil der Betätigungsmechanik der Stechelemente ist an dem Brühkammeroberteil ein federbelasteter Absenkhebel schwenkbar gelagert, der auf dem domförmigen Betätigungselement an der inneren Nadelkulisse gleitbeweglich aufliegt und durch einen Mitnahmebolzen an dem Schwinghebel mitgenommen wird, wenn der Schwinghebel über eine tiefste Stellung des Gleitbolzens hinaus und damit die tiefste Stellung des Brühkammeroberteils hinaus in einem Bereich weitergeschwenkt wird, in dem sich der Gleitbolzen in einem Arretierungsabschnitt der Absenk-/Hubnut befindet, wobei das Brühkammeroberteil in einer geschlossenen Stellung der Brühkammer verbleibt und die Stechalemente durch Absenken des Absenkhebels in das Innere des Brühkammeroberteils eingeschoben werden. In der Bewegungsbahn des Absenkhebels ist ein Arretierungshebel dergestalt angeordnet, dass der Absenkhebel in einer Absenkstellung arretiert wird, um die Nadeln in der in das Brühkammeroberteil eingeschobenen Stellung zu halten, bis der Arretierungshebel durch einen Arretierungsauslöser an dem Träger durch Herausziehen des Trägers gelöst wird. Durch Lösen des Arretierungshebels wird die Rückstellfeder zwischen der äusseren Nadelkulisse und der inneren Nadelkulisse wirksam, welche die innere Nadelkulisse in eine angehobene Stellung bewegt, in der die Nadeln aus dem Inneren des Brühkammeroberteils zurückgezogen sind. Diese Ausführungsform der Schliessmechanik der Brühkammer und der mit ihr gekoppelten Betätigungsmechanik der Stechelemente bewirkt eine zuverlässige Kopplung dieser Mechaniken und damit der Bewegungsabläufe des Brühkammeroberteils, des Trägers mit dem Brühkammerunterteil und der Nadeln als Stechelemente. Es sind jedoch auch andere Ausführungsformen zur Betätigung der Stechelemente in Kopplung mit dem Brühkammeroberteil und dem Träger des Brühkammerunterteils möglich.

In der Ausführungsform gemäss Anspruch 18 ist der Schwinghebel der Schliessmechanik in einer Hebelendstellung arretierbar, in welcher das Brühkammervberteil auf das Brühkammerunterteil abgesenkt ist und damit die Brühkammer geschlossen ist. Zu dieser Arretierung sind keine äusseren Haltekräfte erforderlich.

Hierzu kann der Schwinghebel der Schliessmechanik gemäss Anspruch 19 zweckmässig mit einem ersten Hebelarm und einem zweiten Hebelarm zweiarmig ausgebildet sein, wobei der erste Hebelarm insbesondere manuell betätigbar ist und den Mitnahmebolzen aufweist und der zweite Hebelarm mit dem Gleitbolzen sowie im Abstand zu diesem mit einem Verriegelungshaken versehen ist, der mittels eines Verriegelungsbolzens an dem Chassis verriegelt werden kann. Diese Ausführungsform ist konstruktiv unkompliziert.

Zu einer gleichmässigen, zweiseitigen Belastung des Chassis und verwindungsfreien Lagerung ist das Chassis gemäss Anspruch 20 annähernd Uförmig mit zwei Seitenwänden bzw. Chassisseitenflanken ausgebildet, wobei in beiden Seitenwänden je ein Schwinghebel gelagert ist und beide Schwinghebel durch den als Brücke ausgebildeten Mitnahmebolzen verbunden sind. Der Absenkhebel ist in dieser Anordnung zwischen beiden Schwinghebeln in einer Bewegungsbahn des Mitnahmebolzens angeordnet und kann somit zuverlässig durch diesen niedergedrückt werden, wenn der Mitnahmebolzen mit dem Absenkhebel in Berührung gelangt ist.

Die Einheit der beiden Schwinghebel und des diese verbindenden Mitnahmebolzens kann zusätzlich versteift werden, indem die beiden Schwinghebel weiterhin durch eine jeweils endseitig an dem ersten Hebelarm jedes der beiden Schwinghebel angebrachte Betätigungsbrücke miteinander verbunden sind. Die Betätigungsbrücke ist besonders zur bequemen manuellen Betätigung geeignet.

Ausführungsbeispiele der Erfindung werden im folgenden anhand einer Zeichnung mit elf Figuren beschrieben, in der vorteilhafte Einzelheiten der Erfindung genauer ersichtlich sind. Es zeigen:
- Figur 1: ein Brüheinheitmodul, in dem eine erste Ausführungsform als Grundform der Erfindung verkörpert ist,
- Figur 2: eine Seitenansicht auf das Brüheinheitmodul gemäss Figur 1 ohne eine abgeschnittene vordere Chassisseitenflanke, mit herausgezogenem horizontal verschiebbarem Träger, der auch als Schublade bezeichnet wird, mit eingelegtem Kaffeepouch und geöffneter Brühkammer, teilweise geschnitten,
- Figur 3: eine Seitenansicht des Brüheinheitmoduls gemäss Figur 2, jedoch mit eingeschobenem Träger, geschlossener Brühkammer und einer in einer unteren Position arretierten inneren Nadelkulisse, teilweise geschnitten,
- Figur 4: eine Draufsicht auf das Brüheinheitmodul mit herausgezogenem Träger und Schwinghebeln in oberer Ausgangsstellung,
- Figur 5: eine Draufsicht auf ein Brühkammeroberteil,
- Figur 6: einen versprungenen Schnitt entsprechend der Schnittlinie A-B in Figur 5 durch die geöffnete Brüheinheit mit Teilschnitt des eingeschobenen Trägers und eingelegtem Kaffeepouch,
- Figur 7: den Schnitt durch das Brühkammeroberteil gemäss Figur 6, jedoch bei geöffneter Brühkammer mit abgesenkter innerer Nadelkulisse und mit dem Kaffeepouch, der durch Nadeln gehalten ist,
- Figur 8: einen Mittenschnitt entsprechend der Schnittlinie C-D gemäss Figur 5 durch das Brühkammeroberteil,
- Figur 9: einen Nadelträger mit Nadeln, perspektivisch in größerer Darstellung, als Bestandteil der ersten Ausführungsform,
- Figur 10: einen Mittenschnitt durch eine zweite Ausführungsform des Brühkammeroberteils mit verschiebbaren Nadelträgern und
- Figur 11: einen Mittenschnitt durch eine dritte Ausführungsform eines Brühkammeroberteils mit flexiblen Drähten als Stechelemente.

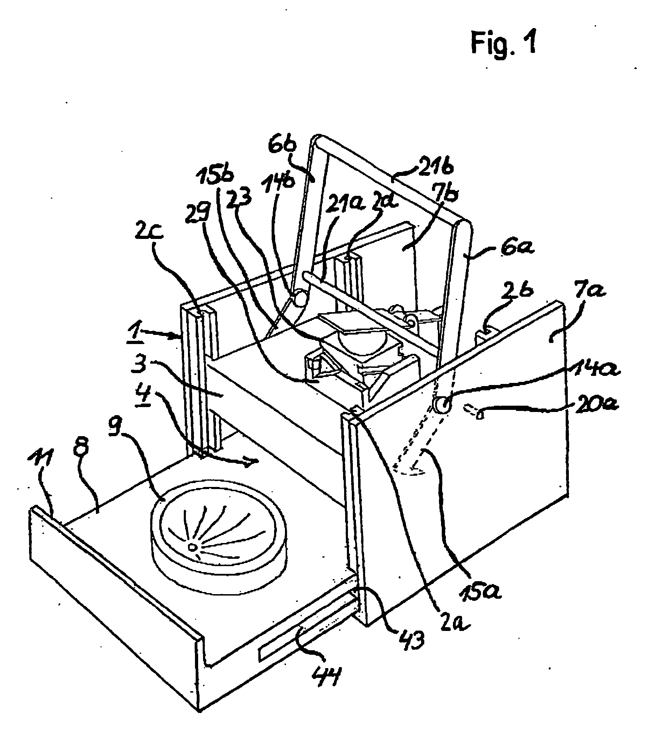

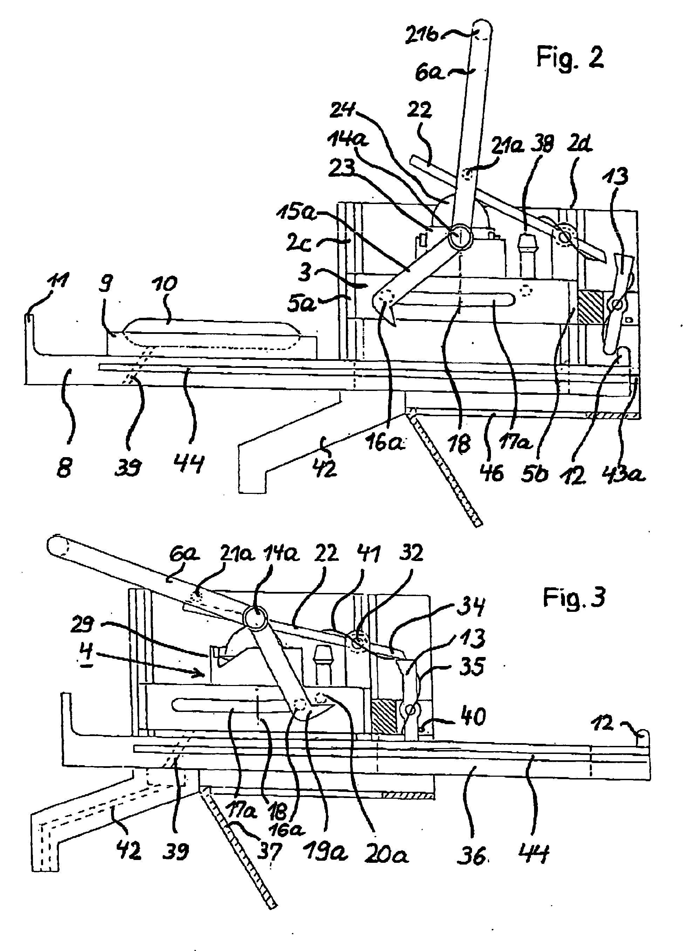

In Figur 1 ist ein Brüheinheitmodul mit einem in einem U-förmigen Chassis 1, und zwar in Führungsnuten 2a, 2b, 2c, 2d vertikal verschiebbaren Brühkammeroberteil 3 der ersten Ausführungsform schematisch dargestellt, von dem vor allem eine einstückig mit ihm ausgebildete äussere Nadelkulisse 29 erkennbar ist, während ein die Brühkammer begrenzender Abschnitt verdeckt ist. Eine vertikale Absenk-/Hubbewegung des Brühkammeroberteils kann mittels Schwinghebeln 6a, 6b erreicht werden, die in zwei Chassisseitenflanken 7a, 7b schwenkbar gelagert sind und mittels eines Mitnahmebolzens 21 a und einer endseitig angebrachten Betätigungsbrücke 21 b zu einer steifen Einheit verbunden sind. Die Schwinghebel 6a, 6b können manuell durch Angreifen an der Betätigungsbrücke 21 b in der vorliegenden Ausführungsform aus einer nahezu senkrechten Position, siehe auch Figur 2, in eine nahezu horizontale Position, siehe auch Figur 3, geschwenkt werden.

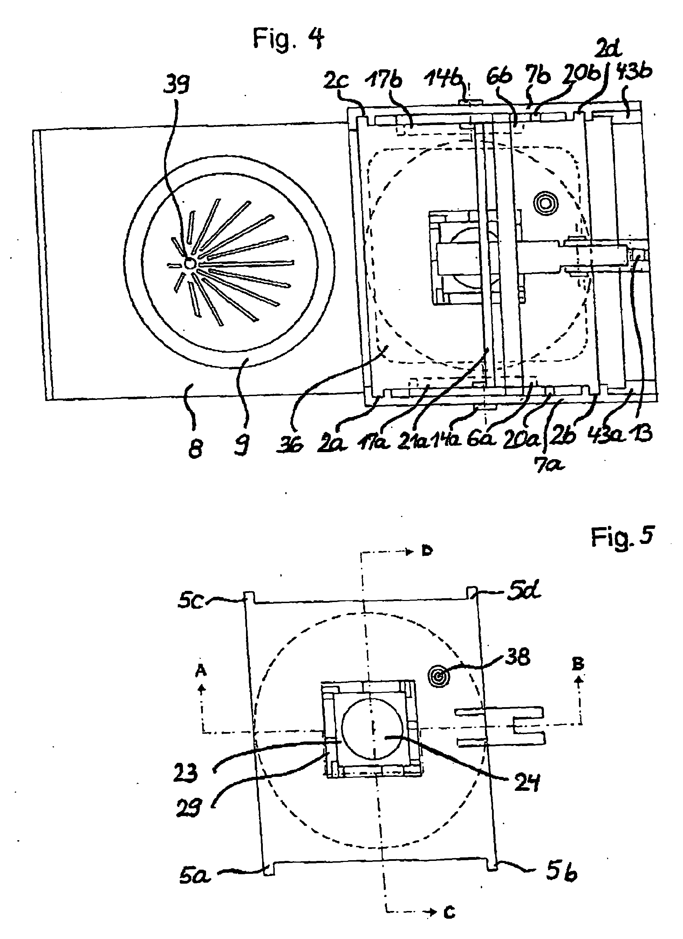

Zu der Brüheinheit 4 gehört weiterhin ein horizontal verschiebbarer Träger 8, der auch als Schublade bezeichnet werden kann und zu dessen Führung Führungsnuten 44 in den Längsseiten des Trägers ausgeformt sind und mittels Chassisführungsleisten 43 verschiebbar sind, von denen eine Chassisleiste 43a in den Figuren 1 und 2 erkennbar ist. Der Träger trägt ein Brühkammerunterteil 9. Er weist ausserdem im Abstand zu dem Brühkammerunterteil 9 einen Pouchdurchbruch 36 auf, der in Figur 1 durch das Brühkammeroberteil 3 verdeckt ist, aber in Figur 4 mit einer unterbrochenen Linie dargestellt ist. Figur 4 zeigt den Träger 8 in der gleichen aus der Brüheinheit 4 herausgezogenen Stellung wie Figur 1.

Zum Beladen des Trägers mit einem frischen Kaffeepouch kann der Träger mittels eines Schubladengriffs 11 so weit aus der gemäss den Figuren 1 und 2 geöffneten Brüheinheit gezogen werden, bis der Weg des Trägers durch einen Arretierungsauslöser 12, der an einem Arretierungshebel 13 anschlägt, siehe Figur 2, begrenzt wird. In dem geöffneten Zustand der Brüheinheit ist das Brühkammeroberteil 3 in seine obere Position gehoben, wie in Figur 2 dargestellt, so dass bei einem nachfolgenden Einschieben des Trägers 8 in die Brüheinheit 4 der Kaffeepouch 10 auf dem Träger 8 nicht am Brühkammeroberteil anstösst, auch nicht, wenn der Träger nach erfolgtem Brühvorgang mit ausgelaugtem, d.h. verbrauchtem, Kaffeepouch wieder aus der Brüheinheit herausgezogen wird. Zunächst aber wird der Kaffeepouch, der, wie in Figur 2 dargestellt, in das Brühkammerunterteil 9 gelegt ist, mittels des Trägers 8 in das Chassis 1 eingeschoben, bis er anstösst. Damit befindet sich das Brühkammerunterteil 9 zentrisch unter dem Brühkammeroberteil 3.

Danach wird die Brüheinheit 4 mittels der Schwinghebel 6a, 6b geschlossen, indem diese um ihre Lagerpunkte 14a, 14b, die in den Chassisseiten 7a, 7b gelagert sind, entgegen dem Uhrzeigersinn nach vorn unten geschwenkt werden in eine Position, die aus Figur 3 ersehen werden kann. Die zweiarmigen Schwinghebel 6a, 6b weisen auf einer Seite der Lagerpunkte untere Arme 15a, 15b auf, aus denen Gleitbolzen 16a, 16b ausgeformt sind, die in Absenk-/Hubnuten 17a, 17b eingreifen, die an beiden Brühkammeroberteilseiten des Brühkammeroberteils 3 ausgebildet sind. Durch die Schwenkbewegung der Schwinghebel 6a, 6b, entgegen dem Uhrzeigersinn in den Figuren 2 und 3, wird das Brühkammeroberteil 3 parallel nach unten gefahren, damit das Brühkammeroberteil 3 auf dem direkt unter es gefahrenen Brühkammerunterteil 9 zur dichten Anlage gelangt und damit eine Brühkammer bildet. Dieser Zustand ist erreicht, wenn sich die Gleitbolzen 16a, 16b in den Absenk-/Hubnuten 17a, 17b vertikal direkt unterhalb der Schwinghebellagerpunkte 14a, 14b befinden, was als untere Totpunktstellung 18 der Schwinghebel 6a, 6b angesehen werden kann, die jedoch zur Betätigung von Nadeln 31 a, 31b, 31 c, 31 d als Stechelemente weiter im Uhrzeigersinn über den unteren Totpunkt hinaus geschwenkt werden, wobei die Gleitbolzen 16a, 16b in nach oben gekrümmten Endabschnitten gleiten, so dass das Brühkammeroberteil 3 seine Position auf dem Brühkammerunterteil 9 beibehält. In dieser Position erfolgt mittels Verriegelungshaken 19a, 19b an den freien Enden der unteren Schwinghebeiarme 15a, 15b an Verriegelungsbolzen 20a, 20b, die an gegenüberliegenden Seiten innen an den Chassisseitenflanken 7a, 7b ausgeformt sind, eine Verriegelung. Dadurch ist das Brühkammeroberteil gegen den Brühdruck in der Brühkammer während des anschliessenden Brühvorganges zusätzlich arretiert.

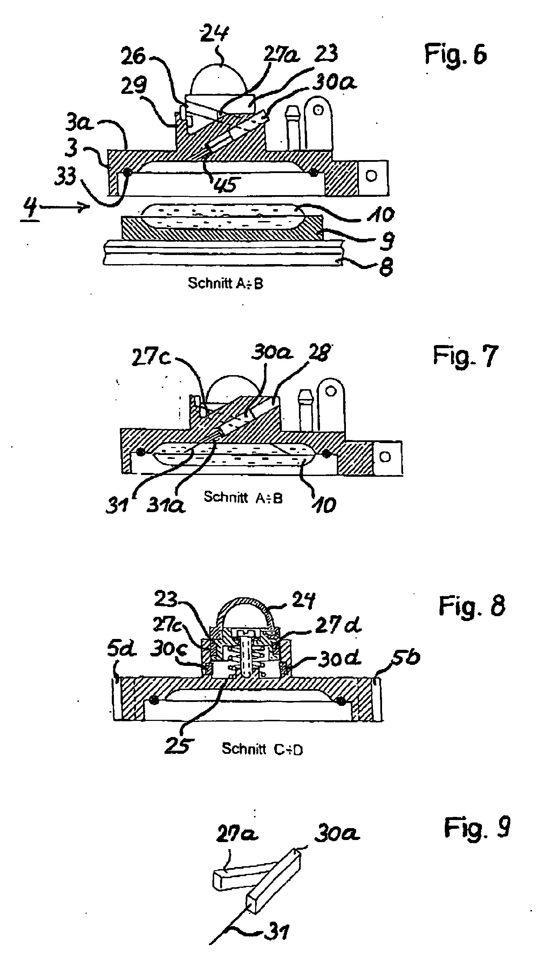

Vor diesem Brühvorgang werden jedoch durch die Schwenkbewegung der Schwinghebel 6a, 6b im Uhrzeigersinn über den unteren Totpunkt 18 hinaus Nadeln in das Innere des Brühkammeroberteils 3 vorgeschoben, von denen eine Nadel 31 in Figur 7 erkennbar ist.

Die durch Aufsetzen des Brühkammeroberteils 3 auf den Brühkammerunterteil 9 gebildete Brühkammer ist durch einen Dichtring 33, siehe Figur 6, gegen den Brühdruck in der Brühkammer nach aussen abgedichtet. Der Dichtring kann aber auch an einer inneren Brühkammerflanke angeordnet sein.

Die Betätigung der Nadeln durch den Mitnahmebolzen 21 a an den Schwinghebeln 6a, 6b erfolgt mittels eines Absenkhebels 22, wenn der Mitnahmebolzen 21 a, der die Schwinghebel 6a, 6b miteinander verbindet, im Verlauf der oben genannten Schwenkbewegung auf den Absenkhebel drückt. Da bei der Abwärtsbewegung des Brühkammeroberteils 3 der auf diesem gelagerte und um einen Drehpunkt 32 schwenkbare Absenkhebel 22 schneller nach unten fährt, als der Mitnahmebolzen 21 a folgen kann, erreicht der Mitnahmebolzen 21 a den Absenkhebel 22 erst, wenn sich die Gleitbolzen 16a, 16b der Schwinghebel 6a, 6b bereits am unteren Totpunkt befinden. Dies bedeutet, dass die innere Nadelkulisse 23, auf der oben ein domförmiges Betätigungselement 24 ausgeformt ist, in der äusseren Nadelkulisse 22 erst durch den Absenkhebel 22 abgesenkt wird, wenn die Gleitbolzen 16a, 16b den unteren Totpunkt 18 erreicht und überschritten haben. Die Betätigung der Nadeln erfolgt also in Bezug auf das Schliessen der Brühkammer durch Herabfahren des Brühkammeroberteils 3 in der Art einer Folgesteuerung. Damit wird sichergestellt, dass die Nadeln 31 erst in den Kaffeepouch stechen, wenn die Brühkammer in der Brüheinheit 4 geschlossen ist, so dass der Kaffeepouch auch im ungünstigsten Fall nicht seitlich ausweichen kann und das dichte Verschliessen der Brühkammer im ungünstigsten Fall beeinträchtigen kann.

Die Betätigung der Nadeln, um diese in das Innere des Brühkammeroberteils 3 und damit in die geschlossene Brühkammer zu schieben, wird durch die Struktur der inneren, annähernd würfelförmigen Nadelkulisse 23 mit aus deren Aussenseiten ausgeformten geneigten inneren Führungsnuten, von denen eine in Figur 6 mit 26 bezeichnet ist, und die die innere Nadelkulisse aufnehmende äussere Nadelkulisse 29 erreicht, an deren Wänden innen vier sogenannte äussere, entgegen den inneren Führungsnuten geneigte Führungsnuten ausgebildet sind, von denen eine äussere Führungsnut 28 in Figur 7 freiliegt.

Eine Nadelträgerarmeinheit, die in jeweils einer äusseren Nadelkulisse und einer inneren Nadelkulisse gleitbeweglich gelagert ist, geht aus Figur 9 hervor. Die Nadelträgerarmeinheit umfasst einen äusseren Nadelträgerarm 30a, der mit einem neben ihm angeordneten inneren Nadelträgerarm 27a an einem Ende fest verbunden ist, und zwar so, dass der innere Nadelträgerarm 27a von der nicht bezeichneten Verbindungsstelle aus gesehen nach oben geneigt ist und der äussere Nadelträgerarm 30a nach unten geneigt ist. An dem unteren freien Ende des äusseren Nadelträgerarms 30a ragt aus diesem die in Verlängerung des äusseren Nadelträgerarms verlaufende Nadel 31 heraus. Solche Nadelträgerarmeinheiten sind an allen vier Aussenseiten der inneren Nadelkulisse 23 bzw. allen Innenseiten der äusseren Nadelkulisse 29 in jeweils einer inneren Führungsnut und in einer äusseren Führungsnut gleitbeweglich angeordnet. Deswegen ist aus dem versprungenen Schnitt A-B in Figur 6 und Figur 7 die Nadelträgerarmeinheit mit dem inneren Nadelträgerarm 27a und dem äusseren Nadelträgerarm 30a ersichtlich und aus dem Schnitt C-D gemäss Figur 8 die Nadelträgerarmeinheiten bestehend aus dem inneren Nadelträgerarm 27c und dem äusseren Nadelträgerarm 30c bzw. dem inneren Nadelträgerarm 27d und dem äusseren Nadelträgerarm 30d.

Aus Figur 8 ergibt sich weiterhin die Anordnung der als Rückstellfeder ausgebildeten Druckfeder 25, welche das domförmige Betätigungselement 24 in dessen hohe Lage nach oben zu drücken sucht.

Durch eine durch den Absenkhebel 22 gegen die Rückstellfeder 25 erfolgende Abwärtsbewegung der inneren Nadelkulisse 23 werden die in den schräg nach oben gerichteten inneren Führungsnuten 26 der inneren Nadelkulisse 23 liegenden inneren Nadelträgerarme 27a, b, c, d nach schräg oben gedrückt und gleichzeitig die mit ihnen fest verbundenen, in den schräg nach unten angeordneten äusseren Führungsnuten 28a, b, c, d der äusseren Nadelkulisse 29 liegenden äusseren Nadelträgerarme 30a, b, c, d und damit die an ihrem unteren Ende angeordneten Nadeln 31 nach schräg unten gedrückt, wobei die in ungedrücktem Zustand sich ausserhalb des Brühraumes befindenden Nadel 31 in den Brühraum geschoben werden und in den Kaffeepouch 10 einstechen.

Während des sogenannten Überhubes der Schwinghebel 6a, 6b, also wenn diese über ihren Totpunkt 18 hinaus mit ihren Gleitbolzen 16a, 16b in die Endabschnitte der Absenk-/Hubnuten 17a, 17b geschwenkt werden, und dementsprechend der Absenkhebel 22 nach unten gedrückt wird, gelangt dessen hinteres Ende 34 aus seiner von einer Arretierungsfeder 35 bestimmten Ruhelage, siehe Figur 2, in eine Arretierungslage, siehe Figur 3, in der sein hinteres Ende 34 über einen nicht bezeichneten Kopf des Arretierungshebels 13, der entgegen der Kraft der Arretierungshebelfeder 35 im Uhrzeigersinn zurückweichen kann, wenn er eine von dem Arretierungsauslöser 12 an dem Träger entfernte Stellung, insbesondere gemäss Figur 3, einnimmt. Dementsprechend werden die in dem Brühkammeroberteil 3 in den Kaffeepouch 10 eingeschobenen Nadeln 31 den Kaffeepouch in dem Brühkammeroberteil festhalten, solange der Arretierungshebel seine durch einen Wegbegrenzer 40 bestimmte Ruhelage einhält.

Für den anschliessenden Brühvorgang wird Brühwasser der Brüheinheit 4 über den auf dem Brühkammeroberteil 3 angeordneten Einlaufstutzen 38 zugeführt, und der aufgebrühte Kaffee läuft über einen Ablaufkanal 39 in dem Träger 8 in dessen eingeschobener Stellung und über einen Ablaufstutzen 42 unten an dem Chassis 1 in ein nicht dargestelltes Auffanggefäss.

Nach erfolgtem Brühvorgang können die Schwinghebel nach oben im Uhrzeigersinn in ihre Ruhelage zurückgeschwenkt werden. Damit fährt das Brühkammeroberteil wieder nach oben. Weil der Absenkhebel 22 durch den Arretierungshebel 13 auf dem Brühkammeroberteil 3 arretiert ist, bleibt die innere Nadelkulisse 23 weiterhin in ihrer gedrückten Position und damit bleiben die Nadeln 31 zunächst in dem ausgelaugten, d.h. verbrauchten Kaffeepouch 10, während dieser mit dem Brühkammeroberteil 3 nach oben fährt und dort verbleibt, solange der Arretierungsauslöser 12 von dem Arretierungshebel 13 entfernt bleibt und somit das hintere Ende 34 des Absenkhebels 22 auf dem Kopf des Arretierungshebels ruht.

Dementsprechend muss zur Entsorgung des verbrauchten Kaffeepouches 10 und zur erneuten Beschickung des Brühkammerunterteils 9 auf dem Träger 8 der Träger bis zu einem Anschlag aus dem Chassis herausgezogen werden, wie in Figur 2 dargestellt, was manuell, durch Federkraft unterstützt, oder motorisch erfolgen kann. Kurz vor Erreichen des maximalen Auszugwegs gelangt der Arretierungsauslöser 12, an dem in den Figuren 2 und 3 rechten Ende des Trägers, an ein unteres Ende des Arretierungshebels 13 und löst dessen Arretierung, indem der Arretierungsauslöser den Arretierungshebel 13 im Uhrzeigersinn schwenkt. Damit wird das hintere Ende 34 des Absenkhebels 22 freigegeben. Er kann damit einer Aufwärtsbewegung des domförmigen Betätigungselements folgen, auf dem er aufliegt. Damit gleiten die inneren Nadelträgerarme 27a, 27b, 27c, 27d in ihren inneren Führungsnuten 26 nach unten und die äusseren Nadelträgerarme 30a , 30b, 30c, 30d in ihren äusseren Führungsnuten 28 nach oben, womit die Nadeln 31 aus dem verbrauchten Kaffeepouch herausgezogen werden, und der Kaffeepouch nach unten fällt. Er fällt dann durch den Trägerdurchbruch 36, der sich direkt unterhalb des Brühkammeroberteils 3 und zu diesem zentriert befindet, und anschliessend durch einen Chassisdurchbruch 46 unter dem Trägerdurchbruch 36 auf eine Entsorgungsschräge 37.

Der verbrauchte Pouch fällt also nach Lösen der Nadeln 31 aus dem Brühkammeroberteil 3 heraus, wenn dieses die in Figur 2 dargestellte Stellung einnimmt, in der ausserdem das Brühkammerunterteil 9 mit einem frischen Kaffeepouch 10 beschickt werden kann, der im Unterschied zu dem aus der Brüheinheit 4 herausfallenden verbrauchten Kaffeepouch in Figur 2 dargestellt ist.

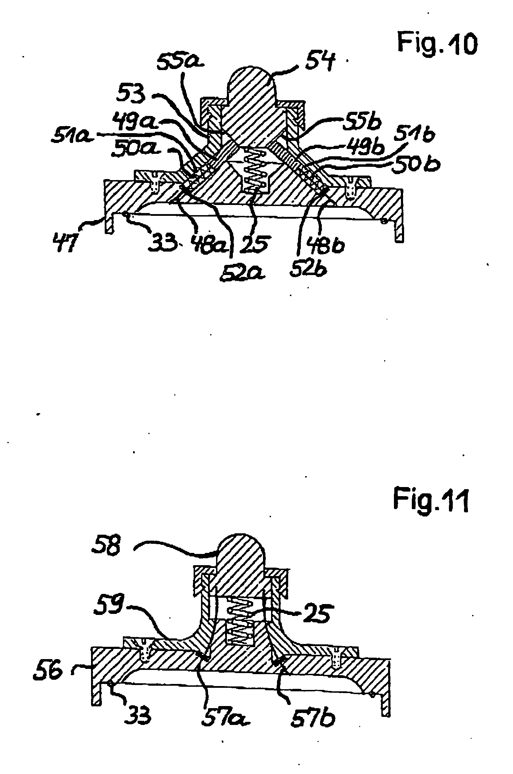

In einer ersten Variante des Brühkammeroberteils gemäss Figur 10, in der das Brühkammeroberteil mit 47 bezeichnet ist, werden ebenfalls Nadeln als Stechelemente verwendet, von denen zwei Nadeln 48a, 48b in Figur 10 erkennbar sind. Rechtwinklig zu der in Figur 10 dargestellten Schnittebene können weitere zwei Nadeln in ähnlicher Weise angeordnet sein. Die Nadeln ragen jeweils aus einem Nadelträgerarm 49a, 49b unten heraus, und zwar schräg nach aussen. Die Nadelträgerarme werden durch Federn 50a, 50b in der in Figur 10 dargestellten Ruhelage gehalten. Führungsnuten der Nadelträgerarme sind mit 51a, 51b bezeichnet. Sie sind an ihrem unteren Ende mit Dichtungen 52a, 52b abgedichtet, auf welches sich die Federn 50a, 50b abstützen können. Die Nadelträgerarme 49a, 49b, Federn 50a, 50b werden in den Führungsnuten 51 a, 51 b durch eine auf das Brühkammeroberteil 47 aufschraubbare Haube 53 gehalten, in der auch ein domförmiges Betätigungselement 54 in einem oberen Halsteil verschiebbar gelagert ist. Das domförmige Betätigungselement 54 kann in gleicher Weise niedergedrückt werden, um die Nadeln 48a, 48b in das Innere des Brühkammeroberteils 47 zu schieben bzw. unter der Wirkung einer zentralen Rückstellfeder 25 in Verbindung mit den Federn 52a, 52b ein Zurückschieben der Nadeln in den Brühkammeroberteil 47 zu gestatten, wie im Falle der ersten Ausführungsform mit dem domförmigen Betätigungselement 24. Bei der Betätigung des domförmigen Betätigungselements 54 können jedoch obere Stirnflächen der Nadelträgerarme 49a, 49b an ebenen Flächen 55a, 55b, die unten an dem domförmigen Betätigungselement 54 abgeschrägt sind, gleiten.

Eine zweite Variante des Brühkammeroberteils 56 gemäss Figur 11 unterscheidet sich von der ersten Variante gemäss Figur 10 und der Grundform gemäss Figuren 1 bis 9 im wesentlichen dadurch, dass als zurückschiebbare Stechelemente elastische Drähte vorgesehen sind, die genügend steif sind, um in einen Kaffeepouch eingeschoben zu werden, und die mit 57a, 57b bezeichnet sind. Die Anordnung der Drähte kann grundsätzlich wie diejenige der Nadeln 48a, 48b usw. in Figur 10 gewählt sein. Obere Enden der Drähte 57a, 57b sind in das domförmige Betätigungselement 58 fest eingelassen. Sie sind darunter gekrümmt wiederum schräg nach aussen geführt und werden hierzu durch eine Haube 59 in ihren nicht bezeichneten Führungen gleitbeweglich gehalten. Die Betätigung des domförmigen Betätigungselements 58 erfolgt wiederum wie bei der Grundausführung gemäss den Figuren 1 bis 9 entgegen der Kraft der zentralen Rückstellfeder 25. Dementsprechend werden die unteren Drahtenden bzw. Spitzen in das Innere des Brühkammeroberteils geschoben, wenn das domförmige Befestigungselement niedergedrückt wird, und wenn dieses frei ist, in das Brühkammeroberteil 56 zurückgezogen.

### Bezugszeichenliste

- 1: Chassis
- 2a, b, c, d: Chassisführungsnuten für Brühkammeroberteil
- 3: Brühkammeroberteil
- 3a: Deckenabschnitt des Brühkammeroberteils
- 4: Brüheinheit
- 5a, b, c, d: Brühkammeroberteilführungsleisten
- 6a, b: Schwinghebel
- 7a, b: Chassisseitenflanken
- 8: horizontal verschiebbarer Träger (Schublade)
- 9: Brühkammerunterteil
- 10: Kaffeepouch
- 11: Schubladengriff
- 12: Arretierungsauslöser
- 13: Arretierungshebel
- 14a, b: Schwinghebellagerpunkte
- 15a, b: untere Schwinghebelarme
- 16a, b: Gleitbolzen
- 17a, b: Absenk-/Hubnuten mit Endabschnitten
- 18: unterer Totpunkt
- 19a, b: Verriegelungshaken
- 20a, b: Verriegelungsbolzen
- 21 a: Mitnahmebolzen
- 21 b: Betätigungsbrücke
- 22: Absenkhebel
- 23: innere Nadelkulisse
- 24: domförmiges Betätigungselement
- 25: Rückstellfeder
- 26: innere Führungsnuten
- 27a, b, c, d: innere Nadelträgerarme
- 28: äussere Führungsnuten
- 29: äussere Nadelkulisse
- 30a, b, c, d: äussere Nadelträgerarme
- 31: Nadel
- 31 a: Nadelkanal
- 32: Absenkhebeldrehpunkt
- 33: Dichtring
- 34: Absenkhebel (hinteres Ende)
- 35: Arretierungshebeifeder
- 36: Pouch-Durchbruch
- 37: Entsorgungsschräge
- 38: Einlaufstutzen
- 39: Ablaufkanal
- 40: Wegbegrenzer
- 41: Absenkhebelfeder
- 42: Ablaufstutzen
- 43a, b: Chassisführungsleisten für Träger
- 44: Trägerführungsnut
- 45: Nadeldichtung
- 46: Chassisdurchbruch
- 47: Brühkammeroberteil
- 48a, b: Nadeln
- 49a, b: Nadelträgerarme
- 50a, b: Federn
- 51 a, b: Führungsnuten
- 52a, b: Dichtungen
- 53: Haube
- 54: domförmiges Betätigungselement
- 55a, b: abgeschrägte Flächen
- 56: Brühkammeroberteil
- 57a, b: Drähte
- 58: domförmiges Betätigungselement
- 59: Haube

## Patentansprüche

1. Kaffeemaschine zur Zubereitung eines Kaffeegetränkes mittels abgepackter, vorportionierter Kaffeepouches (10), umfassend eine Brühkammer, die ein Brühkammeroberteil (3, 47, 56) sowie ein Brühkammerunterteil (9) aufweist, wobei das Brühkammeroberteil (3, 47, 56) mit einer Schließmechanik entlang einer virtuellen, im wesentlichen vertikalen Achse von einer angehobenen Position in eine auf den Brühkammerunterteil (9) abgesenkte Position bewegbar ist, um eine dichte Brühkammer zu bilden, und in die angehobene Position zurückzubewegen, in der ein Träger (8) des. Brühkammerunterteils (9) in einer im wesentlichen horizontalen Ebene von einer eingeschobenen Stellung, in der das Brühkammerunterteil (9) und das Brühkammeroberteil (3, 47, 56) koaxial zueinander angeordnet sind, in eine herausgezogene Stellung, in der ein Pouch (10) auf das Brühkammerunterteil (9) auflegbar ist, und umgekehrt zwischen diesen Positionen verschiebbar ist,
**dadurch gekennzeichnet,**
**dass** in das Innere des Brühkammeroberteils (3, 47, 56) einschiebbare und aus diesem zurückschiebbare Stechelemente an dem Brühkammeroberteil (3, 47, 56) druckdicht gelagert sind, und
**dass** eine Betätigungsmechanik der Stechelemente so mit der Schließmechanik der Brühkammer gekoppelt ist, dass die Betätigungsmechanik nach Absenken des Brühkammeroberteils (3, 47, 56) und damit Verschluß der Brühkammer die Stechelemente in das Innere des Brühkammeroberteils (3, 47, 56) einschiebt und nach Anheben des Brühkammeroberteils und damit Öffnen der Brühkammer und nach Herausziehen des horizontal verschiebbaren Trägers (8) in die herausgezogene Stellung aus dem Inneren des Brühkammeroberteils (3, 47, 56) zurückzieht.

2. Kaffeemaschine nach Anspruch 1,
**dadurch gekennzeichnet,**
**dass** in dem horizontal verschiebbaren Träger (8) ein Pouch-Durchbruch (36) so angeordnet ist, dass sich der Pouch-Durchbruch (36) im wesentlichen zentrisch unter dem Brühkammeroberteü (3, 47, 56) befindet, wenn der Träger (8) in die herausgezogene Stellung bewegt ist.

3. Kaffeemaschine nach Anspruch 1 oder 2,
**dadurch gekennzeichnet,**
**dass** die Stechelemente Nadeln (31; 48a, 48b) sind.

4. Kaffeemaschine nach Anspruch 1 oder 2,
**dadurch gekennzeichnet,**
**dass** die Stechelemente Drähte (57a, 57b) mit in das Innere des Brühkammeroberteils einschiebbaren Drahtenden sind.

5. Kaffeemaschine nach einem der Ansprüche 1 - 4,
**dadurch gekennzeichnet,**
**dass** mehrere Stechelemente einer Stechelementeanordnung in gleichmäßigen Bogenabschnitten um eine virtuellen zentrale vertikale Achse gegeneinander versetzt sind.

6. Kaffeemaschine nach Anspruch 5,
**dadurch gekennzeichnet,**
**dass** wenigstens zwei Stechelemente bevorzugt in gleichen Winkelabständen um die virtuelle zentrale vertikale Achse der Stechelementeanordnung angeordnet sind.

7. Kaffeemaschine nach einem der Ansprüche 1 - 3,
**dadurch gekennzeichnet,**
**dass** die Nadeln (31) tangential an einem virtuellen Kreis um die virtuelle vertikale Achse einer Stechelementeanordnung ausgerichtet sind.

8. Kaffeemaschine nach einem der Ansprüche 1 - 7,
**dadurch gekennzeichnet,**
**dass** die Stechelemente schräg von oben in das Innere des Brühkammeroberteils (3, 47, 56) einschiebbar an diesem gelagert sind.

9. Kaffeemaschine nach Anspruch 8,
**dadurch gekennzeichnet,**
**dass** die Stechelemente so gelagert sind, dass ihre Spitzen bzw. Enden von einer zürückgeschebenen Position nahe der virtuellen zentralen vertikalen Achse in eine von dieser Achse entferntere, in das Innere des Brühkammeroberteils (3, 47, 56) eingeschobene Position schiebbar sind.

10. Kaffeemaschine nach einem der Ansprüche 1 - 9,
**dadurch gekennzeichnet,**
**dass** die Spitzen bzw. Enden der Stechelemente in einem Deckenabschnitt (3a) des Brühkammeroberteils (3) zurückgeschoben sind und aus diesem in das Innere des Brühkammeroberteils einschiebbar sind.

11. Kaffeemaschine nach einem der Ansprüche 8 - 10,
**dadurch gekennzeichnet,**
**dass** das Brühkammeroberteil (3) eine mit der Schliessmechanik koppelbare Kulissenanordnung einer äusseren Nadelkulisse (29) und einer inneren Nadelkulisse (23) aufweist,
**dass** die äussere Nadelkulisse (29) mit dem Brühkammeroberteil (3) in fester Verbindung steht,
**dass** in der äusseren Nadelkulisse (29) die innere Nadelkulisse vertikal verschiebbar geführt ist und mit dieser durch Nadelträgerarmeinheiten gekoppelt ist,
**dass** jede Nadelträgerarmeinheit je einen äusseren, in der äusseren Nadelkulisse verschiebbaren Nadelträgerarm (30a, 30b, 30c, 30d) und einen inneren, in der inneren Nadelträgerkulisse verschiebbaren Nadelträgerarm (27a, 27b, 27c, 27d) umfasst, die nebeneinander versetzt sind, zueinander entgegengesetzt vertikal geneigt sind und an je einem ihrer Enden fest miteinander verbunden sind,
**dass** ein freies, nach unten geneigtes Ende jeweils des einen der Nadelträgerarme (30a, 30b, 30c, 30d) der Nadelträgereinheit die Nadel (31) trägt und
**dass** die Nadel (31) in einem in dem Deckenabschnitt (3a) des Brühkammeroberteils (3) ausgebildeten abgedichteten Nadelkanal (31a) verschiebbar ist; der in das Innere des Brühkammeroberteils (3) gerichtet ist.

12. Kaffeemaschine nach Anspruch 11,
**dadurch gekennzeichnet,**
**dass** zwischen der äusseren Nadelkulisse (29) und der inneren Nadelkulisse (23) eine Rückstellfeder (25) angeordnet ist, welche die innere Nadelkulisse (23) in eine angehobene Stellung bewegt, in der die Nadeln (31) aus dem Inneren des Brühkammeroberteils (3) zurückgezogen sind.

13. Kaffeemaschine nach Anspruch 11 oder 12,
**dadurch gekennzeichnet,**
**dass** auf der inneren Nadelkulisse (23) ein bevorzugt domförmiges Betätigungselement (24) angeordnet ist.

14. Kaffeemaschine nach einem der Ansprüche 11 bis 13.
**dadurch gekennzeichnet,**
**dass** das Brühkammeroberteil (3) und die äussere Nadelkulisse (29) einstückig ausgeformt sind.

15. Kaffeemaschine nach einem der Ansprüche 11 bis 14,
**dadurch gekennzeichnet,**
**dass** jeweils der äussere Nadelträgerarm (30a, 30b, 30c, 30d) einer der Nadelträgerarmeinheiten von einer Verbindungsstelle mit dem inneren Nadelträgerarm (27a, 27b, 27c, 27d) ausgehend nach unten geneigt ist und an seinem freien, unteren Ende die Nadel (31) trägt.

16. Kaffeemaschine nach Anspruch 15,
**dadurch gekenntzeichnet,**
**dass** die Nadel (31) koaxial aus dem freien unteren Ende des äußeren Nadelträgerarms (30a, 30b, 30c, 30d) herausragt.

17. Kaffeemaschine nach einem der Ansprüche 13 bis 16,
**dadurch gekennzeichnet,**
**dass** in einem Chassis (1) das Brühkammeroberteil (3) im wesentlichen vertikal geführt ist und der Träger (8) des Brühkammerunterteils (9) im wesentlichen horizontal verschiebbar ist,
**dass** die Schliessmechanik der Brühkammer mindestens einen Schwinghebel (6a, 6b) umfasst, der an dem Chassis (1) schwenkbar gelagert ist und der entfernt von dem Lager einen Gleitbolzen (16a, 16b) aufweist, weicher in einer mit dem Brühkammeroberteil (3) in Verbindung stehenden Absenk-/Hubnut (17a, 11b) geführt ist, dass an dem Brühkammeroberteil (3) ein federbelasteter Absenkhebel (22) schwenkbar gelagert ist, der auf dem domförmigen Betätigungselement (24) an der inneren Nadelkulisse (23) gleitbeweglich aufliegt und durch einen Mitnahmebolzen (21a) an dem Schwinghebel (6a, 6b) mitnehmbar ist, wenn der Schwinghebel (6a, 6b) über eine tiefste Stellung des Gleitbolzens (16a, 18b) hinaus und damit des Brühkammeroberteils (3) in einem Bereich weitergeschwenkt wird, in dem sich der Gleitbolzen (16a, 16b) in einem Arretierabschnitt der Absenk-/Hubnut befindet, das Brühkammeraberteil (3) in seiner abgesenkten Stellung verbleibt und die Stechelemente durch Absenken des Absenkhebels (22) in das Innere des Brühkammeroberteils (3) eingeschoben werden,
**dass** ein Arretierungshebel (13) so in einer Bewegungsbahn des Absenkhebels (22) angeordnet ist, dass der Absenkhebel (22) in einer Absenkstellung durch ihn arretierbar ist, und dass der Arretierungshebel (13) durch einen Arretierungsauslöser (12) an dem Träger (8) durch Herausziehen des Trägers lösbar ist.

18. Kaffeemaschine nach Anspruch 17,
**dadurch gekennzeichnet,**
**dass** der Schwinghebel (6a, 6b) der Schliessmechanik in einer Hebelendstellung arretierbar ist, in welcher die Brühkammer geschlossen ist.

19. Kaffeemaschine nach den Ansprüchen 17 und 18,
**dadurch gekennzeichnet,**
**dass** der Schwinghebel (6a, 6b) der Schliessmechanik mit einem ersten Hebelarm und einem zweiten Hebelarm (15a, 15b) zweiarmig ausgebildet ist,
**dass** der erste Hebelarm insbesondere manuell betätigbar ist und den Mitnahmebolzen (21a) aufweist und
**dass** der zweite Hebelarm (15a, 15b) mit dem Gleitbolzen (16a, 16b) sowie im Abstand zu diesem mit einem Verriegelungshaken (19a, 19b) versehen ist, der mittels eines Verriegelungsbolzens (20a, 20b) an dem Chassis (1) verriegelbar ist.

20. Kaffeemaschine nach einem der Ansprüche 17 bis 19,
**dadurch gekennzeichnet,**
**dass** das Chassis (1) annähernd U-förmig mit zwei Chassisseitenflanken (7a, 7b) ausgebildet ist,
**dass** in den beiden Chassisseitenflanken (7a, 7b) je einer der Schwinghebel (6a, 6b) gelagert ist,
**dass** beide Schwinghebel (6a, 6b) durch den als Brücke ausgebildeten Mitnahmebolzen (21 a) verbunden sind und
**dass** der Absenkhebel (22) zwischen beiden Schwinghebeln (6a, 6b) in einer Bewegungsbahn des Mitnahmebolzens (21 a) angeordnet ist.

21. Kaffeemaschine nach Anspruch 20,
**dadurch gekennzeichnet,**
**dass** die beiden Schwinghebel (6a, 6b) weiterhin durch eine jeweils endseitig an dem ersten Hebelarm angebrachte Betätigungsbrücke (21 b) miteinander verbunden sind.

## Claims

1. Coffee machine for making a coffee beverage by means of prepacked and pre-portioned coffee pouches (10) comprising a brew chamber which includes a brew chamber top 3, 47, 56) and a brew chamber base (9), said brew chamber top (3, 47, 56) being movable by means of a locking mechanism along a virtual substantially vertical axis from an elevated position to a position lowered on the brew chamber base (9) to form a tight brew chamber and being movable back into the elevated position where a carrier (8) of brew chamber base (9) can be pushed, in an essentially horizontal plane from a pushed-in position in which said brew chamber base (9) and said brew chamber top (3, 47, 56) are disposed coaxially relative to each other, into a drawn-out position in which a pouch (10) can be placed on said brew chamber base (9), and vice versa between these positions
**characterized in**
**that** piercing elements which can be pushed into the interior of said brew chamber top (3, 47, 56) and pushed out therefrom are pressure-tightly supported at said brew chamber top (3, 47, 56) and that an actuation mechanism of said piercing elements is coupled to the locking mechanism of said brew chamber so that after lowering said brew chamber top 3, 47, 56) and thus locking the brew chamber, said actuation mechanism pushes said piercing elements into the interior of brew chamber top (3, 47, 56), and after elevating said brew chamber top and thus opening said brew chamber and after drawing out said horizontally movable carrier (8) into the drawn-out position, withdraws them from the interior of said brew chamber top (3, 47, 58).

2. Coffee machine according to one of claims 1 through 5,
**characterized in**
**that** in said horizontally movable carrier (8) a pouch opening (36) is so disposed that said pouch opening is substantially centrically disposed underneath said brew chamber top (3, 47, 56) when said carrier (8) has been moved into the drawn-out position.

3. Coffee machine according to claim 1 or 2,
**characterized in**
**that** said piercing elements are needles (31; 48a, 48b).

4. Coffee machine according to claim 1 or 2,
**characterized in**
**that** said piercing elements are wires (57a, 57b) having wire ends which can be pushed into the interior of said brew chamber top.

5. Coffee machine according to one of claims 1 through 4,
**characterized in**
**that** a plurality of piercing elements of a piercing element system are staggered relative to each other in equal arc sections about a virtual central vertical axis.

6. Coffee machine according to claim 5,
**characterized in**
**that** at least two piercing elements are disposed preferably at equal angular distances about the virtual central vertical axis of said piercing element system.

7. Coffee machine according to one of claims 1 through 3,
**characterized in**
**that** said needles (31) are tangentially aligned at a virtual circle about the virtual vertical axis of a piercing element system.

8. Coffee machine according to one of claims 1 through 7,
**characterized in**
**that** said piercing elements are supported on said brew chamber top (3, 47, 56) and can be pushed sloping from above into the interior thereof.

9. Coffee machine according to claim 8,
**characterized in**
**that** said piercing elements are supported so that the tips, or ends, thereof can be pushed from a pushed-back position near the virtual central vertical axis into a position more distant from this axis in which said tips, or ends, are moved into the interior of said brew chamber top (3, 47, 56).

10. Coffee machine according to one of claims 1 through 9,
**characterized in**
**that** the tips, or ends, of said piercing elements are pushed-back in a ceiling section (3) of said brew chamber top (3) and can be moved therefrom into the interior of said brew chamber top.

11. Coffee machine according to one of claims 8 through 10,
**characterized in**
**that** said brew chamber top (3) comprises a coulisse arrangement of an outer needle coulisse (29) and an inner needle coulisse (23), which coulisse arrangement is connectable with the locking mechanism,
**that** said outer needle coulisse (29) is solidly connected with said brew chamber top (3),
**that** in said outer needle coulisse (29) said inner needle coulisse is vertically movably guided and is connected to it by needle carrier arm units,
**that** each needle carrier arm unit each comprises an outer needle carrier arm (30a, 30b, 30c, 30d) movable in said outer needle coulisse and an inner needle carrier arm (27a, 27b, 27c, 27d) movable in said inner needle carrier coulisse, which are staggered next to each other, are inversely vertically sloped relative to each other and are solidly connected to each other at one of their ends each, that a free downwardly sloping end of one of said needle carrier arms (30a, 30b, 30c, 30d) each of said needle carrier unit carries the needle (31) and
**that** said needle (31) can be moved within a sealed needle channel (31a) formed in the ceiling section (3a) of said brew chamber top (3), said needle channel (31 a) being directed into the interior of said brew chamber top (3).

12. Coffee machine according to claim 11,
**characterized in**
**that** between said outer needle coulisse (29) and said inner needle coulisse (23) a restoring spring (25) is provided which moves said inner needle coulisse (23) into an elevated position in which the needles (31) are retracted from the interior of said brew chamber top (3).

13. Coffee machine according to claim 11 or 12,
**characterized in**
**that** on said inner needle coulisse (23) a preferably dome-shaped actuation element (24) is provided.

14. Coffee machine according to one of claims 11 through 13,
**characterized in**
**that** said brew chamber top (3) and said outer needle coulisse (29) are made as one piece.

15. Coffee machine according to one of claims 11 through 14,
**characterized in**
**that** the outer needle carrier arm (30a, 30b, 30c, 30d) each of one of said needle carter arm units, starting from a connecting spot with said inner needle carrier arm (27a, 27b, 27c, 27d) is downwardly bent carrying at its free lower end the needle (31).

16. Coffee machine according to claim 15,
**characterized in**
**that** said needle (31) extends coaxially from the free lower end of said outer needle carrier arm (30a, 30b, 30c, 30d).

17. Coffee machine according to one of claims 13 through 16,
**characterized in**
**that** said brew chamber top (3) is guided substantially vertically in a chassis (1) and said carrier (8) of said brew chamber base (9) is substantially movable in horizontal direction,
**that** the locking mechanism of the brew chamber comprises at least one rocking lever (6a, 6b) which is pivotally supported on said chassis (1) and includes, spaced from the support, a gliding bolt (16a, 16b) which is guided in a lowering and elevating groove (17a, 17b) connected with said brew chamber top (3),
**that** on said brew chamber top (3) a spring-loaded lowering lever (22) is pivotally supported which rests glidingly on said dome-shaped actuation element (24) at said inner needle coulisse (23) and can be carried along by a carrier bolt (21 a) on the rocking lever (6a, 6b) when said rocking lever (6a, 6b) is further pivoted beyond a lowest position of gliding bolt (16a, 16b) and thus of said brew chamber top (3) in a range wherein said gliding bolt (16a, 16b) is in a locking section of said lowering and elevating groove, said brew chamber top (3) remains in its lowered position and said piercing elements are moved into the interior of said brew chamber top (3) by lowering said lowering lever (22),
**that** a blocking lever (13) is so disposed in a movement path of said lowering lever (22) that said lowering lever (22) can be blocked by it at a lowering position and that said blocking lever (13) can be released by blocking release (12) on the carrier (8) by drawing the carrier out.

18. Coffee machine according to claim 17,
**characterized in**
**that** said rocking lever (6a, 6b) of said locking mechanism can be blocked at a lever end position at which said brew chamber is locked.

19. Coffee machine according to claims 17 and 18,
**characterized in**
**that** said rocking lever (6a, 6b) of said locking mechanism is provided with a first lever arm and a second lever arm (15a, 15b), i.e. with two arms,
**that** said first lever arm can in particular be manually operated and includes said carrier bolt (21 a) and
**that** said second lever arm (15a, 15b) is provided with said gliding bolt (16a, 16b) and at a distance thereto, with a locking hook (19a, 19b) which can be locked by means of a locking bolt (20a, 20b) on chassis (1).

20. Coffee machine according to one of claims 17 through 19,
**characterized in**
**that** said chassis (1) is approximately U-shaped having two chassis side flanks (7a, 7b),
**that** in said two chassis side flanks (7a, 7b) one of said rocking levers (6a, 6b) each is supported,
**that** the said two rocking levers (6a, 6b) are connected by said carrier bolt (21a) which is designed as a bridge, and
**that** said lowering lever (22) is disposed between said two rocking levers (6a, 6b) in a movement path of said carrier bolt (21a).

21. Coffee machine according to claim 20,
**characterized in**
**that** the said two rocking levers (6a, 6b) are furthermore connected with one another by an actuation bridge (21b) provided on the end sides each of said first lever arm.

## Revendications

1. Machine à café pour préparation d'une boisson de café au moyen de sachets de café (10) pré-divisés en portions et conditionnés, comprenant une chambre d'échaudage qui présente une partie supérieure de chambre d'échaudage (3, 47, 56) et une partie inférieure de chambre d'échaudage (9), la partie supérieure (3, 47, 56) de la chambre d'échaudage pouvant être déplacée au moyen d'un mécanisme de fermeture le long d'un axe virtuel sensiblement vertical depuis une position relevée dans une position abaissée sur la partie inférieure (9) de la chambre d'échaudage, pour former une chambre d'échaudage étanche, et revenir à la position relevée dans laquelle un support (8) de la partie inférieure (9) de la chambre d'échaudage peut être déplacé dans un plan sensiblement horizontal depuis une position rentrée dans laquelle la partie inférieure (9) de la chambre d'échaudage et la partie supérieure (3, 47, 56) de la chambre d'échaudage sont disposées coaxialement entre elles, vers une position sortie dans laquelle un sachet (10) peut être placé sur la partie inférieure (9) de la chambre d'échaudage, et inversement entre ces positions,
**caractérisée**
**en ce que** des éléments de perçage pouvant être insérés à l'intérieur de la partie supérieure (3, 47, 56) de la chambre d'échaudage et pouvant être retirés de celle-ci sont logés de manière étanche à la pression au niveau de la partie supérieure (3, 47, 56) de la chambre d'échaudage, et
**en ce qu'**un mécanisme d'actionnement des éléments de perçage est couplé au mécanisme de fermeture de la chambre d'échaudage de façon telle que le mécanisme d'actionnement, après abaissement de la partie supérieure (3, 47, 56) de la chambre d'échaudage et par conséquent fermeture de la chambre d'échaudage, insère les éléments de perçage à l'intérieur de la partie supérieure (3, 47, 56) de la chambre d'échaudage et, après relèvement de la partie supérieure de la chambre d'échaudage et par conséquent ouverture de la chambre d'échaudage et après extraction du support (8) pouvant être déplacé horizontalement dans la position sortie, les retire de l'intérieur de la partie supérieure (3, 47, 56) de la chambre d'échaudage.

2. Machine à café selon la revendication 1,
**caractérisée en ce que**, dans le support (8) qui peut être déplacé horizontalement est disposée une ouverture pour sachet (36) de façon telle que l'ouverture pour sachet (36) est située de manière sensiblement centrale sous la partie supérieure de chambre d'échaudage (3, 47, 58) lorsque le support (8) est déplacé dans la position sortie.

3. Machine à café selon la revendication 1 ou 2,
**caractérisée en ce que**
les éléments de perçage sont des aiguilles (31; 48a, 48b).

4. Machine à café selon la revendication 1 ou 2,
**caractérisée en ce que**
les éléments de perçage sont des fils métalliques (57a, 57b) dotés d'extrémités pouvant être insérées à l'intérieur de la partie supérieure de la chambre d'échaudage.

5. Machine à café selon l'une des revendications 1 à 4,
**caractérisée en ce que**
plusieurs éléments de perçage d'une structure d'éléments de perçage sont décalés les uns par rapport aux autres en secteurs courbes réguliers autour d'un axe vertical central virtuel.

6. Machine à café selon la revendication 5,
**caractérisée en ce qu'**au moins deux éléments de perçage sont disposés de préférence à des distances angulaires égales autour de l'axe vertical central virtuel de la structure d'éléments de perçage.

7. Machine à café selon l'une des revendications 1 à 3,
**caractérisée en ce que**
les aiguilles (31) sont alignées tangentiellement à un cercle virtuel autour de l'axe vertical virtuel d'une structure d'éléments de perçage.

8. Machine à café selon l'une des revendications 1 à 7,
**caractérisée en ce que**
les éléments de perçage sont logés en oblique depuis le haut au niveau de la partie supérieure (3, 47, 56) de la chambre d'échaudage, de façon à pouvoir s'insérer dans l'intérieur de celle-ci.

9. Machine à café selon la revendication 8,
**caractérisée en ce que**
les éléments de perçage sont logés de façon telle que leurs pointes ou extrémités peuvent être déplacées d'une position rétractée proche de l'axe vertical central virtuel dans une position plus éloignée de cet axe, insérée à l'intérieur de la partie supérieure (3, 47, 56) de la chambre d'échaudage.

10. Machine à café selon l'une des revendications 1 à 9,
**caractérisée en ce que**
les pointes ou extrémités des éléments de perçage sont rétractées dans une section de couverture (3a) de la partie supérieure (3) de la chambre d'échaudage et à partir de celle-ci sont aptes à être insérées à l'intérieur de la partie supérieure de chambre d'échaudage.

11. Machine à café selon l'une des revendications 8 à 10,
**caractérisée en ce que**
la partie supérieure (3) de la chambre d'échaudage présente un système à coulisse pouvant être couplé au mécanisme de fermeture et comprenant une coulisse à aiguille extérieure (29) et une coulisse à aiguille intérieure (23), la coulisse à aiguille extérieure (29) est reliée fixement à la partie supérieure (3) de la chambre d'échaudage,
la coulisse à aiguille intérieure est guidée pour se déplacer verticalement dans la coulisse à aiguille extérieure (29) et est couplée à celle-ci par des ensembles de bras support d'aiguille,
chaque ensemble de bras support d'aiguille comprend respectivement un bras support d'aiguille extérieur (30a, 30b, 30c, 30d) qui peut être déplacé dans la coulisse à aiguille extérieure et un bras support d'aiguille intérieur (27a, 27b, 27c, 27d) qui peut être déplacé dans la coulisse à aiguille intérieure, lesquels sont décalés, inclinés verticalement en opposition mutuelle et reliés fixement entre eux au niveau de l'une de leurs extrémités respectives,
une extrémité libre inclinée vers le bas de respectivement l'un des bras support d'aiguille (30a, 30b, 30c, 30d) de l'ensemble support d'aiguille porte l'aiguille (31) et
l'aiguille (31) peut être déplacée dans un canal d'aiguille (31a) étanchéifié, formé dans la section de couverture (3a) de la partie supérieure (3) de la chambre d'échaudage, qui est orienté en direction de l'intérieur de la partie supérieure (3) de la chambre d'échaudage.

12. Machine à café selon la revendication 11,
**caractérisée en ce que**,
entre la coulisse à aiguille extérieure (29) et la coulisse à aiguille intérieure (23) est disposé un ressort de rappel (25) qui déplace la coulisse à aiguille intérieure (23) dans une position relevée dans laquelle les aiguilles (31) sont rétractées hors de la partie supérieure (3) de la chambre d'échaudage.

13. Machine à café selon la revendication 11 ou 12,
**caractérisée en ce qu'**est disposé sur la coulisse à aiguille intérieure (23) un élément d'actionnement (24), de préférence en forme de dôme.

14. Machine à café selon l'une des revendications 11 à 13,
**caractérisée en ce que**
la partie supérieure (3) de la chambre d'échaudage et la coulisse à aiguille extérieure (29) sont réalisées d'une seule pièce.

15. Machine à café selon l'une des revendications 11 à 14,
**caractérisée en ce que**
respectivement le bras support d'aiguille extérieur (30a, 30b, 30c, 30d) de l'un des ensembles de bras support d'aiguille est incliné vers le bas à partir d'un point de raccordement avec le bras support d'aiguille intérieur (27a, 27b, 27c, 27d) et porte à son extrémité inférieure libre l'aiguille (31).

16. Machine à café selon la revendication 15,
**caractérisée en ce que**
l'aiguille (31) fait saillie coaxialement de l'extrémité libre inférieure du bras support d'aiguille extérieur (30a, 30b, 30c, 30d).

17. Machine à café selon l'une des revendications 13 à 16,
**caractérisée en ce que**
la partie supérieure (3) de la chambre d'échaudage est guidée dans un châssis (1) de manière sensiblement verticale et le support (8) de la partie inférieure (9) de la chambre d'échaudage peut être déplacé dans une direction sensiblement horizontale,
le mécanisme de fermeture de la chambre d'échaudage comprend au moins un levier oscillant (6a, 6b) qui est monté de façon à pivoter sur le châssis (1) et qui présente, à distance du logement, un axe de coulissement (16a, 16b) qui est guidé dans une gorge de descente/montée (17a, 17b) reliée à la partie supérieure (3) de la chambre d'échaudage,
au niveau de la partie supérieure (3) de la chambre d'échaudage est monté de façon à pivoter un levier d'abaissement (22) à ressort qui repose en pouvant coulisser sur l'élément d'actionnement (24) au niveau de la coulisse à aiguille intérieure (23), et peut être entraîné par un axe d'entraînement (21a) situé sur le levier oscillant (6a, 6b) lorsque le levier oscillant (6a, 6b) est pivoté plus loin au-delà d'une position extrême basse de l'axe de coulissement (16a, 16b) et, par conséquent, de la partie supérieure (3) de la chambre d'échaudage, dans une région dans laquelle l'axe de coulissement (16a, 16b) se trouve dans une section d'arrêt de la gorge de descente/montée, la partie supérieure (3) de la chambre d'échaudage reste dans sa position abaissée et les éléments de perçage sont insérés par abaissement du levier d'abaissement (22) à l'intérieur de la partie supérieure (3) de la chambre d'échaudage,
un levier d'arrêt (13) est disposé dans une trajectoire de déplacement du levier d'abaissement (22) de façon telle que le levier d'abaissement (22) peut être arrêté par celui-ci dans une position de descente, et **en ce que** le levier d'arrêt (13) peut être débloqué par un dispositif de déblocage (12) au niveau du support (8) par extraction du support.

18. Machine à café selon la revendication 17,
**caractérisée en ce que**
le levier oscillant (6a, 6b) du mécanisme de fermeture peut être arrêté dans une position de fin de course du levier dans laquelle la chambre d'échaudage est fermée.

19. Machine à café selon les revendications 17 et 18,
**caractérisée en ce que**
le levier oscillant (6a, 6b) du mécanisme de fermeture est du type à deux bras, comportant un premier bras de levier et un deuxième bras de levier (15a, 15b),
le premier bras de levier peut être actionné en particulier manuellement et présente l'axe d'entraînement (21a) et
le deuxième bras de levier (15a, 15b) est muni de l'axe de coulissement (16a, 16b) ainsi que, à distance de celui-ci, d'un crochet de verrouillage (19a, 19b) qui est verrouillable sur le châssis (1) au moyen d'un axe de verrouillage (20a, 20b).

20. Machine à café selon l'une des revendications 17 à 19,
**caractérisée en ce que**
le châssis (1) est sensiblement en forme de U, muni de deux flans de châssis (7a, 7b),
dans les deux flancs de châssis (7a, 7b) est logé respectivement l'un des leviers oscillants (6a, 6b),
les deux leviers oscillants (6a, 6b) sont reliés par l'axe d'entraînement (21a) réalisé sous la forme d'un pont, et
le levier d'abaissement (22) est disposé entre les deux leviers oscillants (6a, 6b) dans une trajectoire de déplacement de l'axe d'entraînement (21a).

21. Machine à café selon la revendication 20,
**caractérisée en ce que**
les deux leviers oscillants (6a, 6b) sont en outre reliés entre eux par un pont d'actionnement (21b) disposé respectivement côté extrémité au niveau du premier bras de levier.
